# FASCICULE DE BREVET EUROPEEN

(11) **EP 3 199 294 B1**
(45) Date de publication et mention de la délivrance du brevet: **07.09.2022**
(21) Numéro de dépôt: 17382033.3
(22) Date de dépôt: 26.01.2017
(51) Int. Cl.: B23Q 3/08, C08F 2/00, C09J 1/00

(54) **SYSTEME ET PROCEDE DE FIXATION/DECOLLEMENT DE PIECES SUR UNE MACHINE-OUTIL PAR LE BIAIS D'UN ADHESIF REVERSIBLE, ET UTILISATION DE CET ADHESIF REVERSIBLE**
SYSTEM UND VERFAHREN ZUR BEFESTIGUNG/ABLÖSUNG VON WERKSTÜCKEN AUF EINER WERKZEUGMASCHINE MITHILFE EINES REVERSIBLEN HAFTKLEBERS, UND VERWENDUNG DIESES REVERSIBLEN HAFTKLEBERS
SYSTEM AND METHOD FOR FIXING/DETACHING PARTS ON A MACHINE TOOL VIA A REVERSIBLE ADHESIVE, AND USE OF SAID REVERSIBLE ADHESIVE

(30) Priorité: 26.01.2016 ES 201630091
(43) Date de publication de la demande: 02.08.2017
(73) Titulaire: Fresmak, S.A., 20800 Zarautz (Guipuzcoa) (ES)
(72) Inventeur: BERRIDI DE QUEVEDO, Francisco Javier, 20800 ZARAUTZ (Gipuzkoa) (ES)
(74) Mandataire: Izquierdo Blanco, Maria Alicia

(56) Documents cités:
- FR-A1- 2 624 872
- JP-A- 2002 052 430
- US-A1- 2015 218 299

## Description

### Objet de l'invention

L'objet de cette invention est un système et un procédé de fixation/décollement de pièces de travail centré particulièrement sur le monde de la machine-outil.

Il est question d'une nouvelle manière de faire face au problème de la fixation et de le résoudre dans son ensemble.

Elle s'appuie sur l'utilisation d'un adhésif réversible basé sur un mélange d'un matériau thermoplastique semi-cristallin basé sur des polyesters aliphatiques avec une résine époxy qui fournit une fixation simple, forte, pratique et économique.

Bien que son développement soit particulièrement indiqué dans le monde de l'usinage, elle peut s'adapter à d'autres types d'utilisations.

Il faut souligner sa grande capacité de fixation pouvant atteindre les 1 000 N/cm2.

Deux technologies cohabitent au sein de ce système de fixation/décollement : la mécanique et la chimie.

### Antécédents de l'invention

D'une part, les systèmes de fixation connus pour ces pièces sont des outils complexes qui comprennent un accessoire sur lequel repose la pièce et une combinaison d'éléments de fixation qui créent les forces de liaison nécessaires à la fixation. En temps normal, l'usinage de pièces à parois fines et à géométriques difficiles comporte plusieurs opérations reliées entre elles.

JP2002052430: Ce dispositif de fixation de pièce de travail, sur lequel se base le préambule de la revendication 1, est pourvu d'une plaque frontale comportant une surface de travail permettant de lier et de fixer une pièce à l'aide d'un adhésif thermofusible, de moyens de chauffage et de refroidissement permettant de chauffer et de refroidir sélectivement la plaque frontale, ainsi que d'une ou plusieurs rainures ménagées surface de travail pour recevoir le surplus d'adhésif. Lorsque le travail est pressé sur l'adhésif fondu, le surplus d'adhésif pénètre dans la rainure proche avant d'être extrudé jusqu'à la fin du travail.

### Problème technique à résoudre

Cette invention se fonde sur une nouvelle technologie qui a pour champ d'application particulier la fixation de pièces à géométrie difficile, de matériaux non ferreux et/ou en petites séries, des pièces complexes de grande valeur avec un domaine toujours plus large, surtout dans les secteurs à forte exigence comme le secteur aéronautique ou aérospatial. Dans ce document, cette complexité de la pièce de travail est définie comme :
- De grandes pièces à géométries complexes, qui nécessitent plusieurs opérations consécutives de fixation-usinage et plusieurs accessoires de fixation de pièces. La pièce se fixe généralement à l'outillage hors de la machine au cours d'une opération de précision qui peut durer de quelques minutes à plus d'une heure.
- Les pièces en matériaux avancés, en particulier non ferromagnétiques comme les alliages d'aluminium, les alliages de titane et les matériaux composites.

Concrètement, l'objet de l'invention est un système tel que défini par la revendication 1 et un procédé selon la revendication 11.

### Avantages de l'invention

L'objet de l'invention est un système de fixation innovant et différent de tout ce que nous connaissons, basé sur le principe d'adhérence, qui vient remplacer ou compléter les technologies connues.

Les principaux avantages de ce système résident dans sa simplicité, sa facilité d'utilisation et son faible coût.
- il comprend les trois éléments nécessaires à la fixation d'une pièce : une base solide qui peut être placée sur la table de la machine et être alignée facilement, une technologie de fixation comme l'adhésif et un système de fixation et de décollement facile et efficace ;
- sa principale caractéristique est qu'il ne fixe que la pièce que par une de ses faces en laissant le reste libre ;
- durant la phase de travail ou d'usinage de la pièce, il ne requiert pas de câble, de tuyauterie ou d'élément qui nécessite une quelconque connexion.
- il occupe un espace minimal de par sa faible épaisseur ;
- il ne met pas en danger la zone de découpe, exactement comme la fixation électromagnétique et sous vide ; • il est adapté pour les parois fines et à géométries complexes ;
- sur une même pièce d'une grande complexité, cette force de liaison est 50 % moins cher que l'alternative sous vide et 80 % moins cher que la solution électromagnétique,
- de plus, il nécessite moins d'équipement d'outillages et moins d'opérations d'usinage, et est 70% moins cher que les systèmes de fixation mécanique.

L'adhésif réversible objet de l'invention est un matériau rigide, qui ne laisse pas de résidus, réutilisable, activé et désactivé en atteignant une température de 120 °C±10 ° c et qui maintient la force de liaison à la température ambiante.

Il s'active à 120 °C ± 10 °C et se désactive à 50 °C ± 10 °C

Il s'agit d'un matériau qui peut être usiné pour des précisions inférieures à 0,003 mm pour créer une haute précision sur les zones de contact à coller.

Il présente une très forte adhésion, avec des forces de fixation par unité de surface de 1000N/cm2.

Cet adhésif est applicable tant sur des matériaux ferromagnétiques que non ferromagnétiques.

Cette particularité est ce qui fait que cet adhésif réversible et à fort pouvoir de fixation, peut être utilisé dans une multitude de secteurs dont fait partie le secteur de la fixation de pièces métalliques pour leur mécanisation.

La température de transition que nous devons utiliser pour ce procédé n'influe pas sur la structure des matériaux à fixer.

Le matériau présente une réponse élevée à la réversibilité de son comportement adhésif, ce qui se répercute sur le grand nombre de cycles qui peuvent être effectués et par conséquent sur la baisse de prix de la technologie.

L'adhésif réversible se comporte correctement face à une variété de substrats, en plus de laisser la surface de ces derniers libre de tout résidu.

La majorité des adhésifs du marché ont la particularité de fixer les matériaux de manière définitive, c'est-à-dire qu'ils n'ont pas la possibilité d'être désactivés ou réactivés lorsque l'utilisateur le souhaite ou le requiert. Il existe certains matériaux qui remplissent cette condition (comme le célèbre « Post-it@ ») mais la force de fixation est très faible.

### Description de l'invention

Le système de fixation de pièces à une machine-outil, objet de cette invention, utilise comme élément de fixation un adhésif réversible.

L'adhésif réversible utilisé est un polymère intelligent qui se base sur l'utilisation des transitions de phases présentes dans les systèmes polymériques comme la fusion et la cristallisation à base de chaleur.

Il s'agit d'un nouvel adhésif avec des propriétés adhésives réversibles sensibles à la température pour développer une nouvelle technologie de fixation, consistant à obtenir un nouveau système de fixation spécifique pour des pièces à parois fines et à géométries asymétriques.

Cet adhésif sert à coller tout type de matériaux, avec la particularité de pouvoir être désactivé et de réactiver son pouvoir adhésif. Cette particularité est ce qui rend cet adhésif réversible.

Ce polymère intelligent est formé d'un matériau unique auto-adhésif qui, à la différence des adhésifs conventionnels, maintient un degré élevé de rigidité sur l'état adhésif même s'il possède la capacité de se décoller après avoir été chauffé.

L'adhésif réversible utilisé est un mélange d'un matériau thermoplastique semi-cristallin basé sur des polyesters aliphatiques avec une résine époxy : mélange physique de polycaprolactone avec de la résine époxy sur une base de diglycidyl éther de bisphénol A et de 4,4'-sulfonyldianiline.

Concrètement, l'adhésif réversible utilisé est un mélange initialement miscible de polycaprolactone (PCL) et d'un polymère époxydique sur une base de diglycidyl éther de bisphénol A (DGEBA/DDS), transformé en une morphologie unique grâce à une séparation de phases induite par polymérisation (PIPS), dont les structures chimiques sont les suivantes:

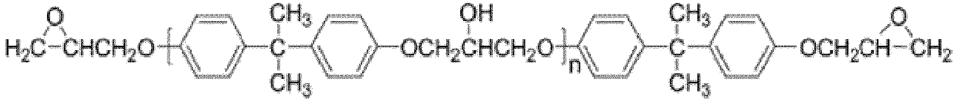

Diglycidyléther de bisphénol / -A (DGEBA), poids équivalent époxy = 172-176 g / mol

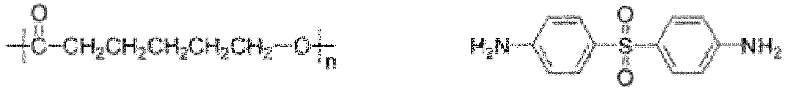

Poly (ε-caprolactone)(PCL),Mₙ≈45000g/mol 4-4'-diaminodiphénylsulfone (DDS), Mₙ=238,3g/mol

À partir d'un mélange de DGEBA/PCL initialement homogène, la réaction de polymérisation se produit et donne lieu à la séparation de phases induite par polymérisation (PIPS). Cette séparation de phases crée une structure biphasique où la résine époxy, après traitement avec l'agent de durcissement (DDS), est en phase « de charge » dont la fonction est de donner au matériau une bonne rigidité et force pour réaliser les principales fonctions mécaniques et structurelles, et la PCL est l'agent adhésif réversible.

La structure interne du matériau n'est pas fortement modifiée avant et après un cycle de libération de l'adhésion. Cela signifie que le matériau peut être réutilisé un certain nombre de cycles consécutifs, ce qui permet l'utilisation pour la fabrication en série, sans changer d'élément adhésif.

La température d'activation de l'adhésif réversible est de 120 °C±10 °C.

La température de désactivation de l'adhésif réversible est de 50 °C±10 °C.

D'autres configurations et avantages de l'invention peuvent être déduits à partir de la description suivante, et des revendications dépendantes.

### Description des dessins

Pour mieux comprendre l'objet de l'invention, les figures en annexe sont représentées sous une forme de réalisation préférentielle et des modifications mineures sont susceptibles de survenir sans que leur fondement ne soit altéré. Dans ce cas:
FIG. 1A représentation par le biais d'une section transversale d'un dispositif de fixation multiple de forme parallélépipédique selon l'invention, sur laquelle est montée une pièce à fixer.
FIG. 1B représentation d'un détail de la FIG 1A où figure un système de fixation antérieur des deux pièces avant collage.
FIG. 1C représentation d'un détail de la FIG 1A où les éléments impliqués, adhésif, plateau d'appui et système autonome de poussée, sont situés dans leur poche.
FIG. 2 représentation par le biais d'une section transversale d'un dispositif de fixation multiple de forme circulaire selon l'invention, sur laquelle est montée une pièce à fixer.
FIG. 3A représentation par le biais d'une section transversale d'un dispositif de fixation multiple de forme angulaire double qui permet de fixer des pièces à géométrie totalement différente de celles représentées dans la FIG 1 avec deux systèmes de poussoirs différents.
FIG. 3B représentation d'un détail de la FIG 3A où figure un système de poussée manuelle et inférieure de l'adhésif.
FIG. 3C représentation d'un détail de la FIG 3A où figure un système de poussée autonome et inférieure de l'adhésif.
FIG. 4A illustre une section transversale d'un dispositif de fixation indépendant ou individuel, avec appui plat fixe pour la pièce à fixer.
FIG. 4B illustre un détail de la FIG 4A par le biais d'une section transversale où le système autonome de poussée de l'adhésif est représenté.
FIG. 4C illustre un détail de la FIG 4A par le biais d'une section transversale où la situation de l'ensemble la pièce à fixer est représentée.
FIG. 5A représentation par le biais d'une section transversale d'un dispositif de fixation indépendant ou individuel, avec appui oscillant pour la pièce à fixer.
FIG. 5B illustre un détail de la FIG 4A par le biais d'une section transversale où la situation des éléments de fixation et la capacité d'oscillation du dispositif sont représentées.

### Description détaillée d'une réalisation préférentielle

Un exemple de réalisation pratique et non exhaustive de la présente invention est décrit ci-après. D'autres modes de réalisation dans lesquels des modifications mineures sont susceptibles de survenir sans que leur fondement ne soit altéré, ne sont en aucun cas mentionnés.

Les éléments essentiels qui intègrent le système de fixation/décollement, objet de l'invention, sont:
- Un corps de base où le reste des éléments sont placés.
- Une unité d'adhésif solide.
- Un système chauffant.
- Un système de refroidissement et
- Un système de compression entre le dispositif de fixation et la pièce à fixer durant l'action de collage.

Le corps de base se présente sous un grand nombre de conceptions, depuis des solutions standards répertoriées, jusqu'à des solutions aux mesures spécifiques.

Selon la géométrie de la pièce (2) à fixer, une certaine conception du dispositif de fixation (1) sera utilisée. Ce dispositif de fixation (1) rend possible l'application de la force de fixation dans des espaces réduits par le biais d'éléments de liaison adhésifs réversibles (21) et d'un système de positionnement, d'orientation et d'alignement de la pièce (2) à fixer.

Sur cette réalisation standard, les dispositifs de fixation (1) sont constitués de corps de base à géométries différentes à l'intérieur desquelles se trouve un élément chauffant (1 1) à forte puissance, un système de refroidissement et un emplacement pour l'adhésif réversible (21).

Le dispositif de fixation (1) comporte sous l'adhésif réversible (21) un plateau (22) qui joue le rôle d'appui contre l'adhésif, en adoptant à cet effet la même forme que l'adhésif réversible (21).

Les dispositifs de fixation standards (1) sont indistincts et inclus dans l'objet de l'invention et peuvent avoir deux versions :
- Un dispositif de fixation (1) multiple avec plusieurs points de fixation, ce qui entraîne plusieurs pastilles d'adhésif réversible (21). Il comporte un élément chauffant (1 1) avec thermocouple général et un système de refroidissement également général pour toute la plaque. Ce dispositif comporte un système pour une fixation à la table de la machine.
- Un dispositif de fixation (1) unitaire avec une pastille unique d'adhésif réversible (21 ), ce qui constitue un unique point de fixation indépendant. Il s'agit d'un élément indépendant avec une ou deux portions d'adhésif réversible (21), qui dispose de son propre élément chauffant (1 1) avec thermocouple et de son système de refroidissement incorporé. De plus, il dispose d'un système indépendant de fixation et de placement sur la table de la machine.

Deux manières basiques de présentation de l'adhésif réversible (21) sont indistinctes et incluses dans l'objet de l'invention :
a.- D'une part, la pastille ou l'élément isolé.
   La forme géométrique de l'adhésif isolé va dépendre de l'utilisation à laquelle il est destiné. La facilité avec laquelle il peut être usiné fait que sa géométrie peut varier d'une forme de pièce de monnaie, de cylindre, de dé, à des formes allongées ou similaires.
b.- D'autre part, la pastille ou l'élément encapsulé.
   L'adhésif encapsulé est une solution qui facilite son remplacement de manière rapide et simple. Cet élément de fixation se fixe à la plaque de base par le biais d'un raccordement vissé pour assurer la rigidité de celle-ci.

Cette présentation est l'antichambre d'un élément commercialisable sur la base d'un montage de cette capsule et d'une résistance, enveloppante ou non, qui active l'adhésif.

L'adhésif réversible (21) décrit nécessite de la chaleur pour être activé. Le chauffage de l'adhésif est obtenu par le biais d'éléments chauffants (11). Ces éléments chauffants (1 1) peuvent être :
des pistolets à air chaud, des résistances électriques, des fours, des radiateurs ou des éléments similaires.

L'élément chauffant (11) utilisé en préférence est la résistance électrique ; et en particulier la résistance électrique type cartouche dans le cas des dispositifs de fixation multiples. C'est de cette manière qu'il est possible de s'approcher au mieux des pastilles d'adhésif.

Les résistances électriques de ce type ont différentes puissantes : Sur les dispositifs de fixation, nous devrons opter pour celle avec la puissance la plus élevée pour réduire le temps de chauffage.

Ces résistances électriques présentent essentiellement les caractéristiques suivantes.

Tube en acier inoxydable AISI 321 rectifié et calibré, fond soudé, étanche jusqu'à une pression de 60 kg /cm².

Résistance du fil de nickel-chrome 80-20 point de fusion à 1400 °C.

Isolement avec oxyde de magnésium électrofondu très compacté.

Connexions par le biais de tiges tressées en nickel, recouvertes de fibre de verre siliconée, flexibles depuis l'intérieur.

Zones froides : Selon le diamètre, 6 à 12 mm sur le côté de la connexion, et entre 4 et 8 mm sur le côté du fond soudé.

Tension normalisée ~ 230 V.

Des cartouches chauffantes sur mesure peuvent également être utilisées.

Dans le cas de dispositifs de fixation unitaires, les résistances électriques les plus indiquées sont celles de section carrée o cylindrique en forme de spirale. Avec ce type de résistances, nous pouvons réaliser un modèle circulaire qui enveloppe le dispositif de fixation.

Le chauffage doit être contrôlé par le biais de sondes thermiques ou thermocouples (13) qui informent à tout moment de la température de l'adhésif réversible (21) et qui nous permettent un travail sûr, sans risque de brûlures. Ces sondes thermiques ou thermocouples (13) peuvent être incluses ou non dans la résistance. Dans le cas du dispositif de fixation (1) objet de cet invention, les thermocouples ou sondes thermiques (13) sont séparés.

Les thermocouples consistent en deux fils métalliques de différents matériaux, reliés à une extrémité. Cette liaison constitue le point de mesure. L'autre extrémité s'appelle jonction froide. Le chauffage de la jonction de mesure provoque une tension électrique, approximativement proportionnelle à la température. Cette tension est due à deux facteurs: la densité d'électrodes différentes des deux matériaux et la différence de température entre le point chaud et le point froid. La présentation commerciale correspond à une pointe métallique avec deux câbles qui donnent la mesure de température à un lecteur transducteur.

La sonde thermique ou le thermocouple (13) devra être situé le plus près possible de la pièce d'adhésif réversible (21) dont nous souhaitons connaître la température.

Pour des situations différentes d'une plaque ou d'un élément similaire, l'ensemble peut être chauffé avec des « pistolets à air chaud ». Ces pistolets électriques soufflent de l'air à haute température et ne sont pas décrits plus en détail car il s'agit d'éléments commerciaux.

Les pistolets recommandés pour ce travail doivent atteindre des puissances de 2 000 W.

L'air chauffé lancé par le pistolet doit être appliqué sur la zone occupée par l'adhésif.

Les plaques avec des résistances électriques incorporées sont des systèmes tiers qui peuvent être utilisés comme élément chauffant. Nous pouvons générer sur une plaque un système de résistances électriques capable de chauffer l'adhésif, ainsi les plaques à coller.

Comme énoncé ci-dessus, les systèmes chauffants les plus habituels sont les résistances électriques car ce sont des éléments massiques géométriquement conçus pour leur utilisation standard, mais cela n'empêche pas l'utilisation d'autres types d'éléments chauffants.

L'adhésif réversible (21) nécessite de refroidir pour être désactivé. Le système de refroidissement résultant de l'étanchéité des pièces, est obtenu par différentes technologies commerciales, comme l'utilisation d'air refroidi et transporté par le biais de circuits, l'utilisation de dépôts de glace solide où est plongée la pièce, l'utilisation de courants de C02 ou même l'utilisation d'azote liquide. Tout dépend de la vitesse de efroidissement nécessaire.

Une fois la liaison des deux pièces obtenue, il faut procéder au refroidissement le plus rapide possible.

Dans le cas des éléments de fixation multiples, il faut profiter des trous des résistances. Ces résistances sont retirées et des conduits reliés entre eux sont mis à la place, par l'endroit où l'air à forte pression ou l'air refroidi par les pistolets qui utilisent la technique de l'effet Venturi circule bien.

Ces pistolets sont capables de réduire de 30 °C à la sortie la température de l'air qu'ils reçoivent à l'entrée. Cela permet un refroidissement rapide de l'outil.

Dans le cas des éléments de fixation unitaires, ces derniers comportent une série d'orifices par lesquels l'air de refroidissement peut passer.

Le système de compression entre le dispositif de fixation (1) et la pièce (2) à fixer durant l'action de collage inclut deux sous-systèmes, un poussoir et un dispositif de retenue.

Système de poussée.

Le procédé de collage nécessite l'existence d'une pression déterminée entre le dispositif de fixation (1), l'adhésif réversible (21) et la pièce à fixer (2), qui comprime l'ensemble et se maintient pendant le temps de chauffage de l'adhésif.

Sur les dispositifs de fixation multiples, objet de l'invention, des poussoirs manuels ont été conçus pour obtenir cette force de liaison.

Ces poussoirs sont filetés sur la plaque de base du dispositif et vissés depuis la zone inférieure avec un couple défini, provocant ainsi une force connue.

Des ressorts de compression ou des rondelles ressorts sont également utilisés pour ces dispositifs de fixation multiples, ainsi que pour les dispositifs de fixation unitaires lorsque l'accès par la partie inférieure est impossible. Comme la partie inférieure du dispositif est inaccessible, il est nécessaire que le système de poussée soit autonome.

Système de retenue.

Étant donné que la pièce à fixer (2) est poussée par le bas, il est nécessaire qu'elle ne puisse pas se séparer de la plaque de base sous l'effet de cette poussée. Pour cela et de manière temporaire - durant le collage- un système de retenue doit être placé. Une fois que le procédé de collage est terminé, ce système se retire pour pouvoir usiner la pièce (2) en toute liberté.

Les systèmes utilisés pour cela sont les brides de fixation descendantes : elles sont filetées à la plaque de base et se fixent par le biais d'une clé dynamométrique en obtenant le couple nécessaire pour le collage.

La force ou pression de fixation obtenue avec l'adhésif dépend dans une certaine mesure de la force de retenue-fixation.

| | | | |
|---|---|---|---|
| COUPLE DE SERRAGE | 2Nm | 5 Nm | 10 Nm |
| PRESSION DE FIXATION | 500 kg/cm2 | 700 kg/cm2 | 1 200 kg/cm2 |

La distribution sur la plaque des brides nécessaires dépend de la géométrie de la pièce.

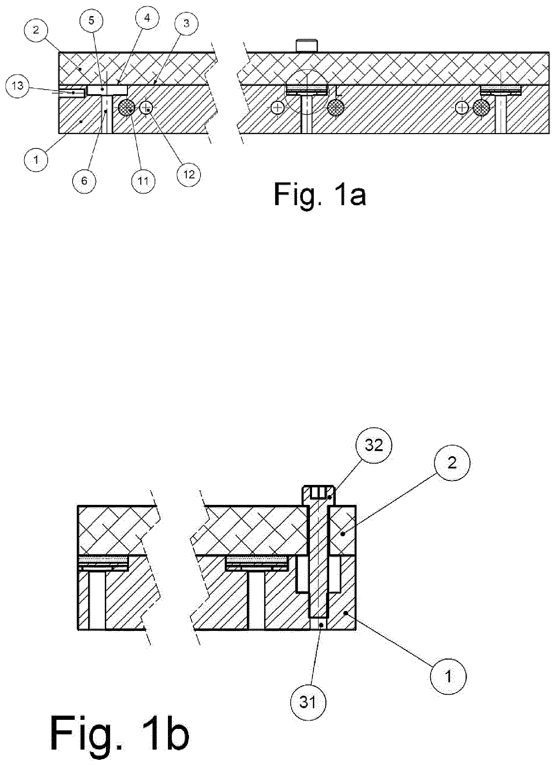

La FIG 1A montre une section transversale d'un dispositif de fixation multiple de forme parallélépipédique conformément à l'invention pour un exemple de réalisation. La surface (3) est celle qui délimite la zone de contact entre le dispositif de fixation (1) et la pièce à fixer (2). Dans cet exemple de réalisation, la surface (3) est plane, même si toutes les autres géométries comme les surfaces concaves, convexes ou incurvées sont en général incluses dans l'objet de l'invention.

De plus, comme le montre la FIG 1A le dispositif de fixation (1) comporte transversalement des orifices pour l'installation des éléments chauffants (1 1). Ces éléments chauffants (1 1) se placent le plus près possible des cavités (5) où se trouve l'adhésif réversible (21) pour éviter des pertes de chaleur qui prolongent son temps d'activation. Dans le sens longitudinal, le dispositif de fixation (1 ) comporte un emplacement dans lequel est placée une sonde de contrôle de la température (13) 30 qui indique lorsque la température de transition de l'adhésif réversible (21) est atteinte pour procéder à la déconnexion des éléments chauffants (11).

D'autre part, comme le montre la FIG 1A, le dispositif de fixation (1) comporte des orifices (12) par lesquels se déplace l'élément de refroidissement. Ces orifices (12) doivent à leur tour être le plus près possible des pastilles d'adhésif (21), pour réduire le temps de refroidissement.

Enfin, comme le montre également la FIG 1A le dispositif de fixation (1) comporte des orifices verticaux (6) qui permettent l'expulsion des éléments qui occupent les cavités (5) pour leur renouvellement.

La FIG 1B montre en détail le système de fixation provisoire de la pièce (2) au dispositif de fixation (1) qui, pour l'exemple de réalisation représenté, sont des vis (32) filetées dans les orifices (31) même si elles peuvent être des brides ou des solutions similaires sans altérer l'essence de l'invention. Le système de fixation provisoire cité a pourfonction de maintenir la force de contact requise par l'adhésif réversible (21) lors du procédé de fixation de la pièce (2) au dispositif de fixation (1). Une fois cette opération terminée, les vis (32) sont retirées pour ne pas gêner l'usinage.

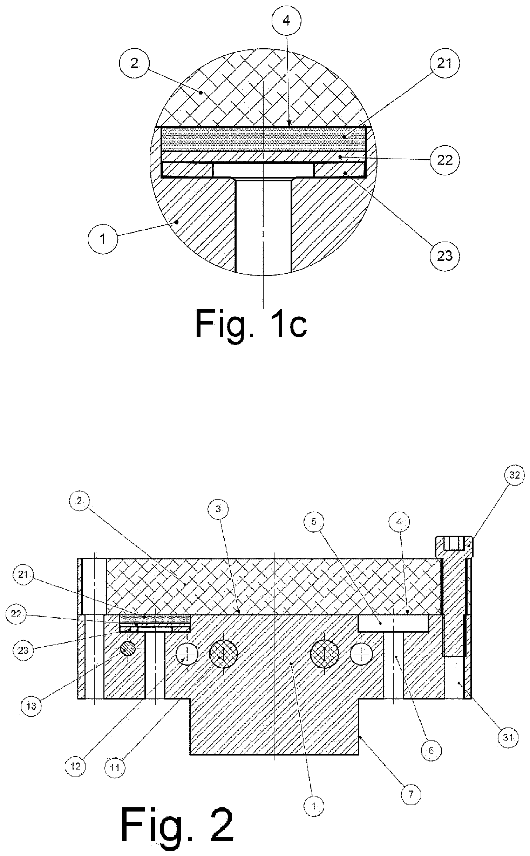

Sur la FIG 1C, les éléments qui vont se loger dans les cavités (5) de la FIG 1A sont détaillés. Dans le sens radial, les éléments de liaison fondamentaux pour la fixation de la pièce (2) sont représentés, comme les éléments de poussée (23), les rondelles (22) et la pastille d'adhésif réversible (21), qui occupe la partie supérieure (4) de la cavité (5) où le dispositif de fixation (1) sera en contact avec la pièce (2).

La FIG 2 montre tous les éléments du dispositif de fixation de la FIG 1A pour un dispositif de fixation multiple de forme circulaire qui peut être utilisé sur des machines rotatives. Leur forme est spécialement conçue pour travailler sur des tours. La partie supérieure du dispositif de fixation (1 ), l'adhésif réversible (21) et la pièce (2) sont en contact sur la surface (3).

Les cavités verticales (5) comportent des éléments de poussée (23), les plateaux d'appui (22) et les pastilles d'adhésif réversible (21). Dans le sens transversal, les orifices restent pour les 25 éléments chauffants (1 1), les orifices (12) du circuit de refroidissement et la sonde de contrôle de température (13).

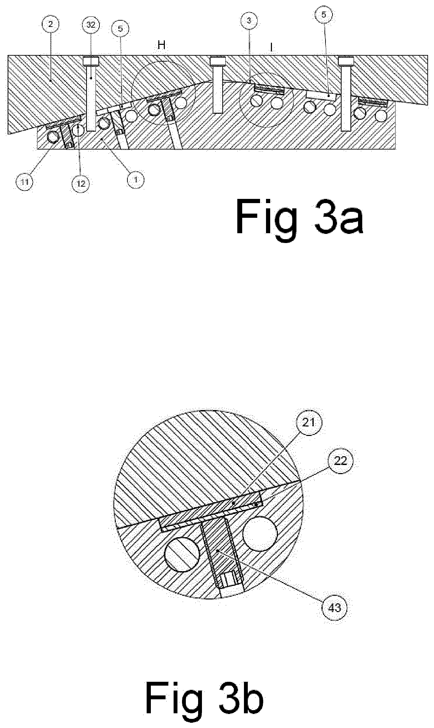

La FIG 3A montre une section transversale sur laquelle le dispositif de fixation (1) est multiple et présente une forme d'angle double. La géométrie du dispositif de fixation (1) que montre la FIG 3A est un exemple de réalisation où la pièce (2) à fixer possède deux pentes qui peuvent avoir la même inclinaison ou non, mais où deux types d'éléments d'adhésion différents sont appliqués. La surface (3) est celle qui délimite la zone de contact entre le dispositif de fixation (1) et la pièce à fixer (2). Dans cet exemple de réalisation, la surface (3) est plane, même si toutes les autres géométries comme les surfaces concaves, convexes ou incurvées sont en général incluses dans l'objet de l'invention.

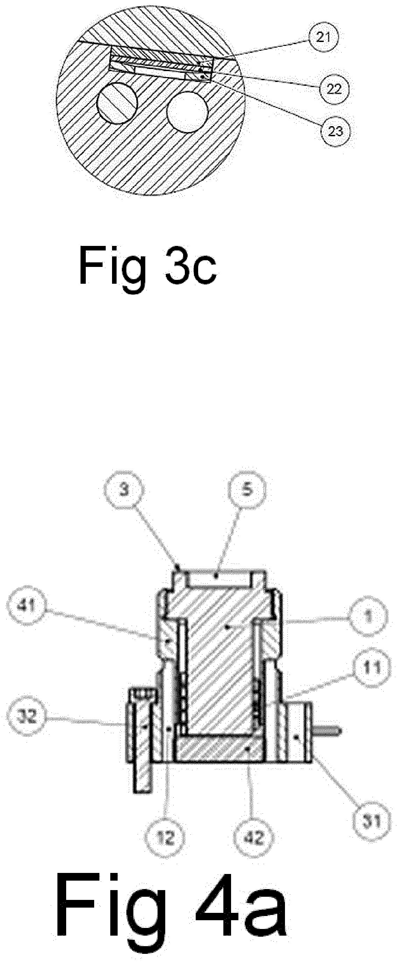

Deux systèmes de poussée sont détaillés dans le dispositif représenté sur le FIG 3A. Le système manuel (d'après le détail « H » élargi qui constitue la FIG 3B) est représenté sur la partie gauche et le système autonome sur la partie droite (d'après le détail « I » élargi qui constitue la FIG 3C).

De plus, comme le montre la FIG 3A, le dispositif de fixation (1) comporte transversalement des orifices pour l'installation des éléments chauffants (1 1). Ces éléments chauffants (11) se placent le plus près possible des cavités (5) où se trouve l'adhésif réversible (21) pour éviter des pertes de chaleur qui prolongent son temps d'activation.

D'autre part, comme le montre la FIG 3A, le dispositif de fixation (1 ) comporte des orifices (12) par lesquels se déplace l'élément de refroidissement. Ces orifices (12) doivent à leur tour être le plus près possible des pastilles d'adhésif réversible (21), pour réduire le temps de refroidissement. De plus, cette figure 3A détaille également le système de fixation provisoire par le biais des vis (32) qui sont utilisées avant la fixation des pièces (2) en utilisant le collage fourni par l'adhésif réversible (21). Les cavités (5) dans le sens radial récupèrent les éléments de liaison essentiels pour la fixation de la pièce (2). Dans ces cavités (5) sont placés les pastilles d'adhésif réversible (21), les plateaux d'appui (22) et dans ce cas précis, un système de poussée manuelle (43) qui fait pression sur l'adhésif réversible (21 ) contre la pièce (2). Ces éléments de poussée manuelle (43) sont contrôlés avec une clé dynamométrique pour assurer la poussée nécessaire de l'adhésif réversible (21) contre la pièce (2) à fixer. Voir FIG 3A et FIG 3B

La FIG 3C détaille un système autonome de poussée de l'adhésif réversible (21) contre la pièce (2) à fixer qui inclut, en plus de l'adhésif réversible (21), un plateau d'appui (22) et la rondelle ressort (23). La profondeur de la cavité (5) et les hauteurs de l'adhésif réversible (21), du plateau d'appui (22) et de la rondelle ressort (23) indiquent de combien sera comprimée la rondelle ressort (23), et par conséquent la force qu'elle exercera sur l'adhésif réversible (21) dans le sens vertical. La FIG 4A montre un dispositif de fixation (1) indépendant ou individuel avec appui plat pour la pièce (2) à fixer (non représentée). La surface de contact (3) comporte un diamètre supérieur à la cavité verticale (5) où se loge l'adhésif (non représenté). Cette différence de diamètre permet que la pièce (2) à fixer soit bien appuyée sur la zone extérieure à l'adhésif réversible (21).

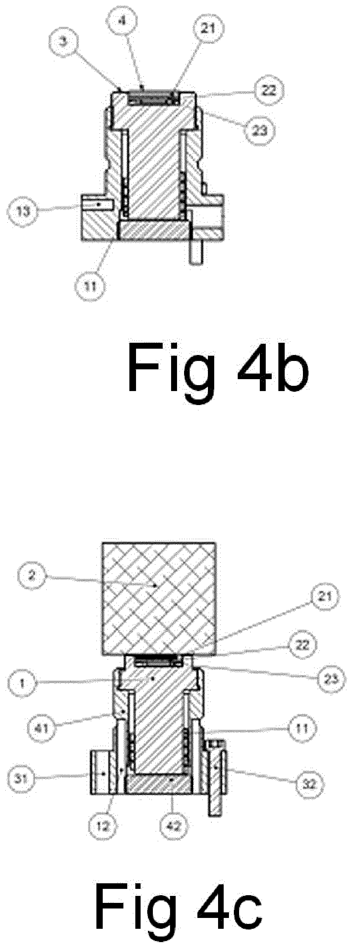

Selon la FIG 4A, ce dispositif de fixation (1) a une forme normalement cylindrique (41) qui lui donne à la fois finesse et rigidité. Ils sont totalement déplaçables. La base est étanche par le couvercle (42). Sur la partie supérieure et perpendiculaire à la surface (3), elle comporte une cavité verticale (5). Le détail de la FIG 4B montre que sur la cavité verticale (5) citée, se trouvent l'élément de poussée (23), le plateau d'appui (22) et l'adhésif réversible (21 ).

La FIG 4C offre une vue similaire aux FIG 4A et FIG 4B avec la pièce (2) puisqu'il s'agit de fixation incorporée. Sur cet exemple de réalisation du dispositif de fixation (1), les trous (31) sont traversants de telle manière que, par le biais de vis (32), ils peuvent se fixer à une partie fixe, (base ou élément de liaison comme peut l'être la table de la machine).

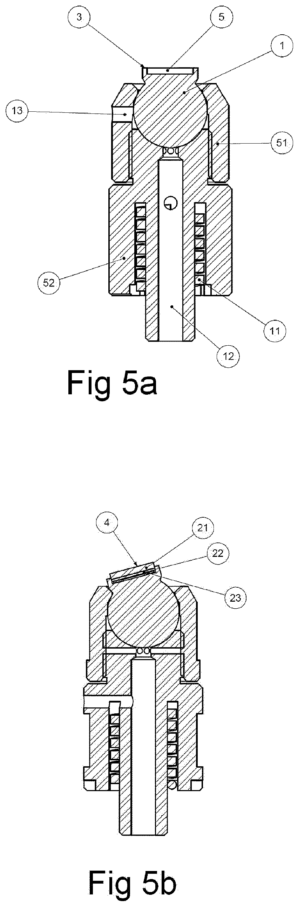

La FIG 5A montre un dispositif de fixation (1) indépendant ou individuel avec appui oscillant pour la pièce à fixer (non représentée). Cette capacité d'oscillation permet de fixer des pièces (2) à faces inclinées. La surface de contact (3) a un diamètre supérieur à la cavité verticale (5) où se loge l'adhésif réversible (21). Cette différence de diamètre permet que la pièce (2) à fixer soit bien appuyée sur la zone extérieure à l'adhésif réversible (21).

D'après la réalisation représentée sur la FIG 5A, ce dispositif de fixation (1) a une forme (52) normalement cylindrique qui lui donne à la fois finesse et rigidité. Ce dispositif comporte sur la partie inférieure un système de liaison à un autre support ou des rallonges qui lui permettent de se fixer à une partie fixe (base ou élément de liaison comme peut l'être la table de la machine).

La FIG 5A montre en outre les éléments de chauffage (1 1), les orifices (12) du circuit de réfrigération et la sonde de contrôle de température (13). Sur la partie supérieure et perpendiculaire à la surface (3) sur la cavité verticale (5) se logent l'élément de poussée (23), le plateau d'appui (22) et l'adhésif réversible (21) qui sont détaillés sur la FIG 5B.

## Revendications

1. Système de fixation et décollement pièces de travail par le biais d'un adhésif réversible; caractérisé d'une part en ce qu'il comprend:
a1) un dispositif de fixation (1) muni d'une surface extérieure (3) de contact avec la pièce (2) à usiner; disposant sur cette surface extérieure (3) d'une ou plusieurs cavités (5) dans lesquelles est logé un adhésif réversible (21) sous forme d'unité d'adhésif solide, qui est un mélange physique de polycaprolactone avec de la résine époxy sur une base de diglycidyl éther de bisphénol A et de 4,4'-sulfonyldianiline;
a2) des éléments de chauffage (11) de l'adhésif réversible (21);
a3) un circuit de refroidissement (12) de l'adhésif réversible (21),
a4) des moyens de compression et poussée de l'adhésif réversible (21) entre le dispositif de fixation (1) et la pièce (2) à fixer, et d'autre part en ce que b) le dispositif de fixation (1) comporte sous l'adhésif réversible (21) un plateau (22) d'appui de l'adhésif, ayant à cet effet la même forme que l'adhésif réversible (21), et pouvant être actionné par les moyens de compression et poussée de l'adhésif réversible (21).

2. Système, selon la revendication 1, **caractérisé en ce que** la pièce (2) à usiner se fixe toujours en étant appuyée sur la partie fixe du dispositif de fixation (1) ; ce dispositif de fixation (1) disposant en outre des éléments nécessaires au placement et à l'alignement de la pièce (2) à usiner.

3. Système, selon la revendication 1, **caractérisé en ce que** le dispositif de fixation (1) dispose d'un unique point de fixation indépendant, étant l'adhésif une pastille et ce qui entraîne une seule pastille d'adhésif réversible (21) dans la cavité (5).

4. Système, selon la revendication 1, **caractérisé en ce que** le dispositif de fixation (1) dispose de plusieurs points de fixation, ce qui entraîne plusieurs pastilles d'adhésif réversible (21), avec une pastille par cavité (5).

5. Système, selon la revendication 3, **caractérisé en ce que** la zone de collage du dispositif de fixation (1) est un corps cylindrique de diamètre extérieur à la zone qu'occupe l'adhésif réversible (21).

6. Système, selon la revendication 5, **caractérisé en ce que** la zone d'assise de la pièce (2) sur le dispositif de fixation (1) est fixe.

7. Système, selon la revendication 5, **caractérisé en ce que** la zone d'assise de la pièce (2) sur le dispositif de fixation (1) est oscillante, pour permettre de fixer des pièces (2) à faces inclinées.

8. Système, selon la revendication 4, **caractérisé en ce que** le dispositif de fixation (1) est un corps de n'importe quelle géométrie sur lequel se répartissent les différentes cavités (5) pour loger l'adhésif réversible (21); ce corps étant de faible épaisseur.

9. Système, selon la revendication 1, **caractérisé en ce que** les éléments de chauffage (11) sont disposés a l'intérieur du dispositif de fixation (1) ; ces éléments de chauffage (11) étant des résistances électriques ou des pistolets à air chaud.

10. Système, selon la revendication 1, **caractérisé en ce que** les éléments de chauffage (11) comprennent des sondes de température (13).

11. Procédé de fixation et décollement utilisant le système de la revendication 1, **caractérisé en ce que** selon ce même procédé
a) la fixation est effectuée en procédant aux actions suivantes :
a1) placer la pièce à usiner (2) sur la surface extérieure (3) du dispositif de fixation (1)
a2) serrer le dispositif de fixation (1) et la pièce à usiner (2) entre eux
a3) connecter les éléments de chauffage (11) et chauffer l'adhésif réversible (21) jusqu'à atteindre la température de 120°C ±10°C
a4) déconnecter les éléments de chauffage (11) et refroidir l'ensemble
b) usiner la pièce (2) ; et
c) effectuer le décollement, en connectant les éléments de chauffage (11) jusqu'à ce que l'adhésif réversible (21) atteigne une température de 50 °C ±10 °C, la pièce usinée étant libérée (2).

## Patentansprüche

1. System zum Befestigen/Ablösung von Werkstücken an/von einer Werkzeugmaschine mittels reversiblem Klebstoff; **dadurch gekennzeichnet, dass** es umfasst:
a1) eine Befestigungsvorrichtung (1), die mit einer Außenfläche (3) in Kontakt mit dem zu bearbeitenden Werkstück (2) versehen ist; auf dieser Außenfläche (3) Hohlräume (5) aufweist, in denen ein reversibler Klebstoff (21) untergebracht ist, der eine physikalische Mischung aus Polycaprolacton mit Epoxidharz auf der Basis von Diglycidylether von Bisphenol A und von 4,4'-Sulfonyldianilin ist;
a2) Heizelemente (11) des reversiblen Klebers (21);
a3) einen Kühlkreislauf (12) für den reversiblen Klebstoff (21).
a4) Kompressions- und Schiebemittel des reversiblen Klebers (21) zwischen der Befestigungsvorrichtung (1) und dem zu befestigenden Werkstück (2),
und andererseits darin, dass b)
die Befestigungsvorrichtung (1) unter dem reversiblen Kleber (21) eine Stützplatte aufweist, die die gleiche Form wie der reversible Kleber (21) hat und durch Zusammendrücken und Schieben mittels des reversiblen Klebers (21) betätigbar ist.

2. System nach Anspruch 1, **dadurch gekennzeichnet, dass** das zu bearbeitende Werkstück (2) immer befestigt wird, indem es auf dem Befestigungsteil der Befestigungsvorrichtung (1) gestützt wird; wobei diese Befestigungsvorrichtung (1) ferner die zum Positionieren und Ausrichten des zu bearbeitenden Werkstücks (2) erforderlichen Elemente aufweist.

3. System nach Anspruch 1, **dadurch gekennzeichnet, dass** die Befestigungsvorrichtung (1) einen einzigen unabhängigen Befestigungspunkt aufweist, wobei der Klebstoff ein Pad ist, was dazu führt, dass nur ein Klebepad (21) in dem Hohlraum (5) vorhanden ist.

4. System nach Anspruch 1, **dadurch gekennzeichnet, dass** die Befestigungsvorrichtung (1) mehrere Befestigungspunkte aufweist, was zu mehreren reversiblen Klebepads (21) mit einem Pad pro Hohlraum (5) führt.

5. System nach Anspruch 3, **dadurch gekennzeichnet, dass** die Verbindungsfläche der Befestigungsvorrichtung (1) ein zylindrischer Körper mit einem Außendurchmesser ist, der größer als die Fläche ist, die von dem reversiblen Klebstoff (21) eingenommen wird.

6. System, nach Anspruch 5, **dadurch gekennzeichnet, dass** die Auflagefläche des Werkstücks (2) an der Befestigungsvorrichtung (1) befestigt ist.

7. System nach Anspruch 5, **dadurch gekennzeichnet, dass** die Auflagefläche des Werkstücks (2) auf der Befestigungsvorrichtung (1) eine Schwingfähigkeit aufweist, die es erlaubt, die Werkstücke (2) mit schrägen Flächen zu befestigen.

8. System nach Anspruch 4, **dadurch gekennzeichnet, dass** die Befestigungsvorrichtung (1) ein Körper beliebiger Geometrie ist, auf dem verschiedene Hohlräume (5) verteilt sind, um den reversiblen Klebstoff (21) aufzunehmen; dieser Körper ist dünn.

9. System nach Anspruch 1, **dadurch gekennzeichnet, dass** die Heizelemente (11) innerhalb der Befestigungsvorrichtung (1) angeordnet sind; diese Heizelemente (11) sind elektrische Widerstände oder Heißluftpistolen.

10. System nach Anspruch 1, **dadurch gekennzeichnet, dass** die Heizelemente (11) Temperatursensoren (13) umfassen.

11. Verfahren zur Befestigung und Ablösung unter Verwendung des Systems nach Anspruch 1, **dadurch gekennzeichnet, dass** nach diesem dasselbe Verfahren erfolgt
a) die Befestigung erfolgt, indem folgende Handlungen durchgeführt werden:
a1) Auflegen des zu bearbeitenden Teils (2) auf die Außenfläche (3) der Befestigungsvorrichtung (1)
a2) Zusammenspannen der Befestigungsvorrichtung (1) und des zu bearbeitenden Werkstücks (2).
a3) Verbinden der Heizelemente (11) und Erhitzen des reversiblen Klebers (21), bis etwa die Temperatur von 120°C ± 10°C erreicht ist
a4) Ablösen der Heizelemente (11) und Abkühlen der Anordnung
b) Werkstück (2) bearbeiten; und
c) Durchführen des Ablösens, Verbinden der Heizelemente (11), bis der reversible Klebstoff (21) eine Temperatur von ungefähr 50°C ± 10°C erreicht, wobei das Werkstück gelöst wird (2).

## Claims

1. System for fastening/detaching workpieces to/from a machine tool by means of a reversible adhesive;
**characterised in that** it comprises:
a1) a fastening device (1) provided with an outer surface (3) in contact with the workpiece (2) to be machined;
having on this outer surface (3) cavities (5) in which is housed a reversible adhesive (21), which is a physical mixture of polycaprolactone with epoxy resin on a basis of diglycidyl ether of bisphenol A and of 4,4'-sulfonyldianiline;
a2) heating elements (11) of the reversible adhesive (21);
a3) a cooling circuit (12) for the reversible adhesive (21).
a4) compression and pushing means of the reversible adhesive (21) between the fastening device (1) and the workpiece (2) to be fastened,
and, on the other hand, **in that** b)
the fastening device (1) has under the reversible adhesive (21) a support plate that has the same shape as the reversible adhesive (21) and can be operated by compression and pushing means of the reversible adhesive (21).

2. System, according to claim 1, characterised because the workpiece (2) to be machined is always fastened by being supported on the fastening part of the fastening device (1); this fastening device (1) further having the elements necessary for positioning and aligning the workpiece (2) to be machined.

3. System, according to claim 1, characterised because the fastening device (1) has a single independent fastening point, the adhesive being a pad, which results in there being only one adhesive pad (21) in the cavity (5).

4. System, according to claim 1, characterised because the fastening device (1) has several fastening points, which results in several reversible adhesive pads (21), with one pad per cavity (5).

5. System, according to claim 3, **characterised in that** the bonding area of the fastening device (1) is a cylindrical body with an outer diameter greater than the area occupied by the reversible adhesive (21).

6. System, according to claim 5, **characterised in that** the seating area of the workpiece (2) on the fastening device (1) is fastened.

7. System, according to claim 5, **characterised in that** the seating area of the workpiece (2) on the fastening device (1) has an oscillation capacity, allowing the workpieces (2) to be fastened with inclined faces.

8. System, according to claim 4, **characterised in that** the fastening device (1) is a body of any geometry on which different cavities are distributed (5) to house the reversible adhesive (21); this body being thin.

9. System, according to claim 1, **characterised in that** the heating elements (11) are arranged inside the fastening device (1); these heating elements (11) being electrical resistors or hot air guns.

10. System, according to claim 1, **characterised in that** the heating elements (11) comprise temperature sensors (13).

11. Method of fastening and detachment using the system of claim 1, **characterised in that** according to this same method
a) the fastening is carried out by carrying out the following actions:
a1) placing the part to be machined (2) on the external surface (3) of the fastening device (1)
a2) clamping the fastening device (1) and the workpiece to be machined (2) together
a3) connecting the heating elements (11) and heating the reversible adhesive (21) until approximately the temperature of 120°C±10°C is reached
a4) disconnecting the heating elements (11) and cooling the assembly
b) machine the workpiece (2); and
c) carry out the detachment, connecting the heating elements (11) until the reversible adhesive (21) reaches a temperature of approximately 50°C±10°C, the workpiece being released (2).
